# EUROPÄISCHE PATENTSCHRIFT

(11) **EP 3 193 315 B1**
(45) Veröffentlichungstag und Bekanntmachung des Hinweises auf die Patenterteilung: **02.03.2022**
(21) Anmeldenummer: 16151455.9
(22) Anmeldetag: 15.01.2016
(51) Int. Cl.: F16M 11/22, F16M 11/20, G07G 1/00, F16M 11/10

(54) **KASSENSYSTEM MIT SCHWENKBAREN ARMEN**
CHECKOUT SYSTEM WITH PIVOTING ARMS
SYSTEME DE CAISSES COMPRENANT DES BRAS PIVOTANTS

(43) Veröffentlichungstag der Anmeldung: 19.07.2017
(73) Patentinhaber: Wincor Nixdorf International GmbH, 33106 Paderborn (DE)
(72) Erfinder: Baitz, Günter, 13629 Berlin (DE); Lüke, Wilfried, 33758 Schloß Holte-Stukenbrock (DE)

(56) Entgegenhaltungen:
- WO-A1-2014/160959
- WO-A1-2016/001138
- US-A1- 2005 156 024
- US-A1- 2007 058 329
- US-A1- 2012 131 826
- US-A1- 2012 268 398
- US-A1- 2013 020 445
- US-A1- 2013 334 376
- US-S1- D 542 833

## Beschreibung

Die Erfindung betrifft ein Kassensystem, das eine Trägereinheit zum Befestigen des Kassensystems auf einer Standfläche, eine erste Anzeige zum Anzeigen von Informationen an eine Bedienperson und/oder einen Kunden sowie einen ersten Arm zum Halten der Anzeigeeinheit umfasst.

Bekannte Kassensysteme weisen in der Regel zwei Anzeigeeinheiten auf, wobei eine von ihnen zum Kunden und die andere zum Kassierpersonal gerichtet ist. Ferner haben bekannte Kassensysteme einen Computer sowie einen Bondrucker, über den nach dem Kassiervorgang der Bon für den Kunden ausgedruckt wird. Die Anzeigeeinheiten sind üblicherweise an Trägerarmen angeordnet und entsprechend zur Seite des Kunden bzw. des Kassierpersonals gerichtet.

Der Bondrucker muss regelmäßig gewartet werden. Insbesondere muss regelmäßig die entsprechende Papierrolle gewechselt werden. Bei bekannten Kassensystemen ist der Zugriff auf den Bondrucker aufgrund der Bildschirme nur begrenzt möglich, so dass die Wartung nur mit großem Aufwand und entsprechendem Geschick möglich ist.

Bei anderen Kassensystemen sind zur besseren Wartung die Bildschirme im großen Abstand zum Bondrucker angeordnet, was zu dem Problem führt, dass das Kassensystem sehr viel Bauraum benötigt, was bei den in der Regel engen Platzverhältnissen an Supermarktkassen nachteilig ist.

Aus dem Dokument WO 2016/001138 A1 ist ein Kassensystem bekannt, das eine Basis 4 aufweist, an der seitlich an gegenüberliegenden Seiten zwei Arme vorgesehen sind, wobei einer dieser Arme starr ausgebildet ist und im anderen Arm ein Gelenk vorgesehen ist, so dass der obere Teil des Armes, an dem ein Display 3 befestigt ist, verschwenkt werden kann. Als Display kann insbesondere ein einen Touchscreen aufweisender Tablet-Computer verwendet werden. In dem Zwischenraum zwischen den beiden Armen ist bei einer der gezeigten Ausführungsformen ein Bon-Drucker 30 angeordnet.

Aus dem Dokument US 2005/0156024 A1 ist ein POS-Terminal bekannt, das einen LCD-Bildschirm, der Informationen anzeigt und frei in eine gewünschte Position gekippt werden kann, einen Drucker, der die Informationen auf Papier druckt, eine Papierausgabeöffnung, aus der das Papier ausgegeben wird, und einen Controller, der das POS-Terminal steuert, umfasst. Der Papierauslass befindet sich im Hauptgehäuse an einer Position unterhalb des LCD-Bildschirms.

Aus dem Dokument US D 542 833 S ist ein POS-Terminal bekannt, dass zwei bewegliche Bildschirme und einen Bondrucker umfasst.

Es ist Aufgabe der Erfindung, ein Kassensystem anzugeben, welches kompakt aufgebaut ist und dennoch einen einfachen komfortablen Zugriff auf den Bondrucker und/oder den Computer ermöglicht.

Diese Aufgabe wird durch ein Kassensystem mit den Merkmalen des Anspruchs 1 gelöst. Vorteilhafte Weiterbildungen der Erfindung sind in den abhängigen Ansprüchen angegeben.

Erfindungsgemäß weist der erste Arm einen ersten Abschnitt und einen relativ zu diesem schwenkbaren zweiten Abschnitt auf, wobei das dem zweiten Abschnitt entgegengesetzte Ende des ersten Abschnitts an der Trägereinheit befestigt ist. Insbesondere ist der erste Abschnitt unbeweglich an der Trägereinheit befestigt, so dass die Ausrichtung der Trägereinheit und des ersten Abschnitts zueinander unveränderlich ist.

An dem dem ersten Abschnitt entgegengesetzten Ende des zweiten Abschnitts ist die erste Anzeigeeinheit angeordnet, wobei an dem zweiten Abschnitt hierfür insbesondere eine Befestigungseinheit zur lös- und wiederherstellbaren Befestigung der Anzeigeeinheit vorgesehen sein kann.

Durch die Trägereinheit und den ersten Abschnitt des ersten Arms ist ein Aufnahmebereich zur Aufnahme eines Bondruckers begrenzt, wobei dieser Aufnahmebereich insbesondere derart ausgebildet ist, dass der Bondrucker an vorgesehenen Montageeinheiten befestigt werden kann. Der Aufnahmebereich ist insbesondere, bei bestimmungsgemäßer Ausrichtung des Kassensystems nach unten durch die Trägereinheit und seitlich durch den ersten Abschnitt des ersten Armes begrenzt.

Erfindungsgemäß ist der zweite Abschnitt des ersten Arms derart gelenkig an dem ersten Abschnitt befestigt, dass er in einer ersten Position oberhalb des Aufnahmebereiches angeordnet ist und in einer zweiten Position derart angeordnet ist, dass er nicht oberhalb des Aufnahmebereichs angeordnet ist, so dass der Bereich oberhalb des Aufnahmebereiches, insbesondere in der gesamten Breite, die die Trägereinheit aufweist, frei ist.

Hierdurch wird erreicht, dass das Kassensystem zum einen kompakt aufgebaut ist und dennoch ein einfacher Zugriff auf die in dem Aufnahmeeinheit angeordneten Einheiten möglich ist. Der kompakte Aufbau wird dadurch erreicht, dass der zweite Abschnitt und somit die an ihm befestigte erste Anzeigeeinheit in der ersten Position oberhalb des Aufnahmebereichs und somit oberhalb des Bondruckers und/oder Computers angeordnet ist, so dass nur eine sehr geringe Standfläche während der eigentlichen Benutzung des Kassensystems notwendig ist. Für Wartungszwecke kann der zweite Abschnitt und somit die erste Anzeigeeinheit einfach von der ersten in die zweite Position verschwenkt werden, so dass der gesamte Bereich oberhalb des Bondruckers und/oder Computers, also der gesamte Bereich, der direkt über den genannten Einheiten angeordnet ist, frei ist und somit ein Deckel des Bondruckers und/oder Computers für die Wartung einfach und komfortabel abgenommen werden kann. Nach der Wartung wird der Deckel wieder aufgesetzt und der zweite Abschnitt mit der an ihm befestigten ersten Anzeigeeinheit wird wieder von der zweiten Position in die erste Position verschwenkt, so dass das Kassensystem wieder betriebsbereit ist.

Die erste Position ist somit insbesondere die Position, in der der zweite Abschnitt und somit die erste Anzeigeeinheit während der Benutzung des Kassensystems angeordnet ist. Die zweite Position dagegen ist insbesondere die Position, in der der zweite Abschnitt und somit die erste Anzeigeeinheit während der Wartung angeordnet ist.

Erfindungsgemäß umfasst das Kassensystem eine zweite Anzeigeeinheit zur Anzeige von Informationen an eine Bedienperson und/oder einen Kunden sowie einen zweiten Arm zum Halten dieser zweiten Anzeigeeinheit. Insbesondere wird eine der beiden Anzeigeeinheiten zur Anzeige der Informationen an den Kunden und die andere zur Anzeige an die Bedienperson, also insbesondere einen Kassierer oder eine Kassiererin, verwendet. Hierdurch wird erreicht, dass sowohl der Kunde als auch die Bedienperson gleichzeitig und komfortabel die angezeigten Informationen, beispielsweise die bereits eingescannten Waren und deren Preise, sehen kann.

Der zweite Arm umfasst ebenfalls einen ersten und einen relativ zu diesem schwenkbaren zweiten Abschnitt, wobei das dem zweiten Abschnitt entgegengesetzte Ende des ersten Abschnitts des zweiten Arms an der Trägereinheit befestigt ist und die zweite Anzeigeeinheit an dem dem ersten Abschnitt des zweiten Arms entgegengesetzten Ende des zweiten Abschnitts des zweiten Arms angeordnet ist.

Der Aufnahmeeinheit zur Aufnahme des Bondruckers und/oder Computers wird somit an der Seite, an der der zweite Arm ist, durch den Abschnitt des zweiten Armes begrenzt.

Auch der zweite Arm ist derart ausgebildet, dass der zweite Abschnitt des zweiten Arms derart gelenkig an dem ersten Abschnitt des zweiten Arms befestigt ist, dass er in einer ersten Position oberhalb des Aufnahmebereichs angeordnet ist und einer zweiten Position derart angeordnet ist, dass der Bereich oberhalb des Aufnahmebereichs frei ist, also in dieser zweiten Position der zweite Abschnitt und somit die an ihm angeordnete zweite Anzeigeeinheit nicht oberhalb des Aufnahmebereichs und insbesondere nicht oberhalb eines Bondruckers angeordnet ist.

Hierdurch wird erreicht, dass auch der zweite Abschnitt des zweiten Armes und die zweite Anzeigeeinheit für die Wartung der in dem Aufnahmebereich angeordneten Einheiten einfach abgeschwenkt werden kann, so dass trotz kompaktem Aufbau eine einfache Wartung möglich ist.

Bei einer bevorzugten Ausführungsform der Erfindung sind der erste Arm und der zweite Arm identisch aufgebaut, so dass nur wenige Teile für die Fertigung benötigt werden und somit eine kostengünstige Fertigung möglich ist. Zum anderen wird hierdurch ein ansprechendes Design erreicht.

Der zweite Abschnitt des ersten Armes ist in der zweiten Position vorzugsweise relativ zur ersten Position um einen Winkel zwischen 70° und 110°, insbesondere um einen Winkel von etwa 90°, verschwenkt. Entsprechend ist insbesondere auch der zweite Abschnitt des zweiten Armes in der zweiten Position relativ zu der ersten Position um einen Winkel zwischen 70° und 110°, insbesondere um einen Winkel von etwa 90°, verschwenkt. Bei einer alternativen Ausführungsform können der erste und/oder der zweite Arm auch derart ausgebildet sein, dass der zweite Abschnitt jeweils um etwa 180° zum ersten Abschnitt verschwenkbar ist, so dass ein noch besserer Zugriff auf den Aufnahmebereich möglich ist.

In der ersten Position ist der erste Abschnitt des ersten Armes relativ zum zweiten Abschnitt des ersten Armes bzw. der erste Abschnitt des zweiten Armes relativ zum zweiten Abschnitt des zweiten Armes jeweils in etwa orthogonal angeordnet. Hierdurch wird erreicht, dass ein besonders kompakter Aufbau gegeben ist.

Erfindungsgemäß sind in der zweiten Position der erste Abschnitt und der zweite Abschnitt des ersten Armes bzw. der erste Abschnitt und der zweite Abschnitt des zweiten Armes jeweils in einer Ebene angeordnet, so dass der gesamte erste bzw. zweite Arm als ein langgestreckter Arm ausgebildet ist und somit möglichst wenig Platz beansprucht wird und ein besonders einfacher Zugriff auf die dem Aufnahmebereich angeordneten Einheiten möglich ist.

Erfindungsgemäß sind der erste Abschnitt und der zweite Abschnitt des ersten Armes und der erste Abschnitt und der zweite Abschnitt des zweiten Armes jeweils über ein Gelenk miteinander verbunden und die Gelenke sind jeweils derart ausgebildet, dass der zweite Abschnitt relativ zum ersten Abschnitt um eine Drehachse verschwenkbar gelagert ist, wobei durch diese Verschwenkbarkeit das entsprechende Verstellen des zweiten Abschnitts zwischen der ersten und der zweiten Position gegeben ist.

Erfindungsgemäß sind das Gelenk des ersten Armes und das Gelenk des zweiten Armes derart ausgebildet, dass die jeweilige Anzeigeeinheit des entsprechenden Armes zum Einstellen des Betrachtungswinkels der Anzeigeeinheit um eine Kippachse verkippbar angeordnet ist. Diese Kippachse ist orthogonal zu der Drehachse angeordnet, um die der zweite Abschnitt beim Verstellen zwischen der ersten und der zweiten Position verschwenkt wird. Somit kann auf einfache Weise der Betrachtungswinkel in eine für die Benutzer ergonomisch günstige Position gebracht werden.

Bei einer weiteren Ausführungsform können die Gelenke der Arme auch als dreiwertige Gelenke ausgebildet sein, durch die der zweite Abschnitt jeweils relativ zum ersten Abschnitt um drei, insbesondere jeweils orthogonal zueinander angeordnete, Achsen verschwenkt werden kann. Hierdurch wird die Verstellbarkeit der Arme weiter erhöht, so dass zum einen ein noch besserer Zugriff auf den Aufnahmebereich und zum anderen eine variablere Ausrichtung der Anzeigeeinheiten möglich sind.

Der erste Abschnitt und/oder der zweite Abschnitt können insbesondere rohrförmig ausgebildet und derart gelagert sein, dass sie um ihre Längsachse drehbar sind. Hierdurch wird auf einfache Weise eine Verstellbarkeit um die Achse erreicht.

Ferner ist es vorteilhaft, wenn der erste Abschnitt des ersten Arms und/oder der erste Abschnitt des zweiten Arms jeweils in eine vorbestimmte Richtung relativ zur Trägereinheit verschiebbar an der Trägereinheit angeordnet sind. Hierzu sind die Arme insbesondere auf Schlitten angeordnet, die auf an der Trägereinheit angeordneten Schienen geführt sind. Durch dies Verschiebbarkeit wird der Zugriff auf die im Aufnahmebereich angeordneten Elemente erleichtert.

Bei einer besonders bevorzugten Ausführungsform der Erfindung umfassen die erste und/oder die zweite Anzeigeeinheit jeweils einen Bildschirm, insbesondere einen Touchscreen, so dass über die Anzeigeeinheit auch eine Eingabe von Informationen möglich ist. Der Bildschirm kann insbesondere fest an dem jeweiligen zweiten Abschnitt angeordnet sein. Bei einer alternativen Ausführungsform der Erfindung kann an dem zweiten Abschnitt auch lediglich eine Befestigungseinheit angeordnet sein, in die ein Tablet als Anzeigeeinheit eingeschoben werden kann.

Erfindungsgemäß sind die beiden Arme an gegenüberliegenden Seiten der Trägereinheit angeordnet. Insbesondere ist das Kassensystem derart ausgebildet, dass es achsensymmetrisch zu einer durch den Mittelpunkt der Trägereinheit verlaufenden, auf der Trägereinheit orthogonal aufstehenden Achse ist. Somit wird ein besonders kompakter Aufbau und ein ansprechendes Design erreicht.

Die beiden Arme sind insbesondere derart an der Trägereinheit befestigt, dass ihre Längsachsen bei planmäßiger horizontaler Ausrichtung der Trägereinheit nicht vertikal verlaufen sondern geneigt sind. Insbesondere sind die beiden Arme zu entgegengesetzten Seiten geneigt, so dass der eine zum Kunden und der andere zur Bedienperson geneigt ist, wodurch die Bildschirme zum einen möglichst nah an der jeweiligen Position angeordnet sind und zum anderen sich in der ersten Position nicht gegenseitig behindern.

Die Trägereinheit ist insbesondere plattenförmig und weist vorzugsweise mehrere Löcher auf, durch die zum Anschrauben der Trägereinheit an der Standfläche Schrauben oder ähnliche Elemente geführt werden können.

Die Trägereinheit weist insbesondere einen Aufnahmebereich auf, in dem ein Computer, insbesondere ein Mini-Computer, aufgenommen werden kann. Hierdurch wird ein besonders kompakter Aufbau erreicht. Dieser Aufnahmebereich ist insbesondere allseitig vom Gehäusebereich der Trägereinheit umgeben, so dass der Computer geschützt ist.

Ferner ist es vorteilhaft, wenn die Trägereinheit und/oder der Aufnahmebereich derart ausgebildet sind, dass der Bondrucker in mindestens zwei verschiedenen Ausrichtungen in ihm aufnehmbar und auf der Trägereinheit befestigbar ist, wobei der Bondrucker in diesen beiden Ausrichtungen relativ gesehen um 180° gedreht angeordnet ist. Hierdurch wird erreicht, dass der Bondrucker wahlweise derart angeordnet werden kann, dass er den Bon an die Bedienperson oder direkt an den Kunden ausgibt.

Ferner ist es vorteilhaft, wenn an der Trägereinheit eine Abdeckklappe zum Abdecken von Schnittstellen und Verkabelungen des Druckers und/oder Computers vorgesehen ist. Hierdurch werden die entsprechenden Schnittstellen und Verkabelungen geschützt.

Weitere Merkmale und Vorteile der Erfindung ergeben sich aus der folgenden Beschreibung, die die Erfindung anhand von Ausführungsbeispielen in Zusammenhang mit den beigefügten Figuren näher erläutert. Es zeigen:
- Figur 1: eine schematische, perspektivische Darstellung eines Kassensystems gemäß einer ersten Ausführungsform ohne Drucker;
- Figur 2: eine schematische, perspektivische Darstellung des Kassensystems nach Figur 1 mit ausgeblendeten Bildschirmen;
- Figur 3: eine schematische, perspektivische Darstellung des Kassensystems nach den Figuren 1 und 2 mit Bondrucker und in einer ersten Position angeordneten Anzeigeeinheit;
- Figur 4: eine schematische, perspektivische Darstellung des Kassensystems nach den Figuren 1 bis 3 mit in einer zweiten Position angeordneten Anzeigeeinheit;
- Figur 5: eine schematische, perspektivische Darstellung eines Ausschnitts des Kassensystems nach den Figuren 1 bis 4 mit Blick auf ein Gelenk;
- Figur 6: eine schematische, perspektivische Darstellung des Kassensystems nach den Figuren 1 bis 5 mit in einer dritten Position angeordneten Anzeigeeinheit;
- Figur 7: eine schematische, perspektivische Darstellung eines Kassensystems gemäß einer zweiten Ausführungsform mit einer in einer ersten Position angeordneten Anzeigeeinheit; und
- Figur 8: eine schematische, perspektivische Darstellung des Kassensystems nach Figur 7 mit in einer zweiten Position angeordneten Anzeigeeinheit.

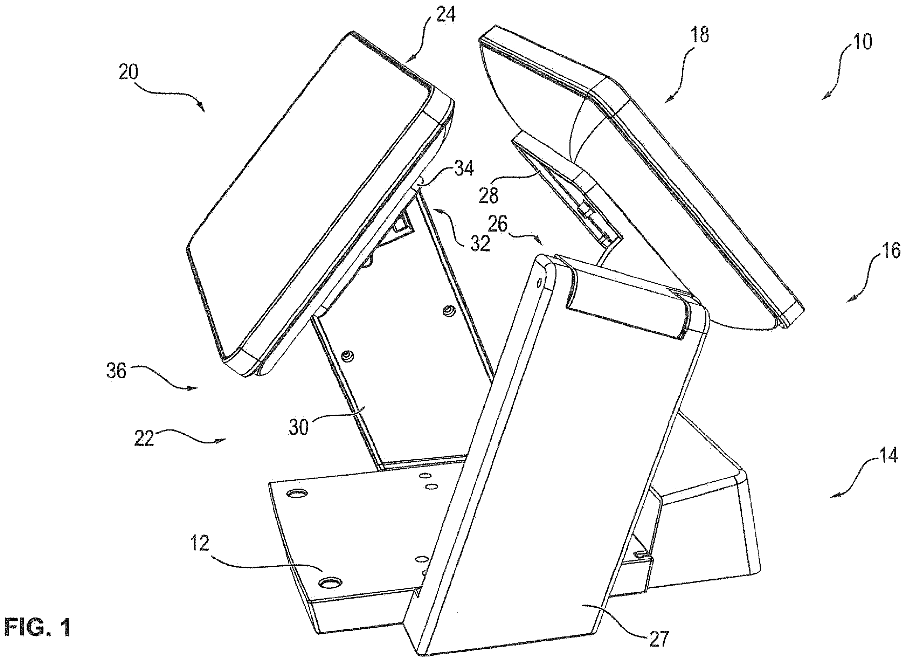

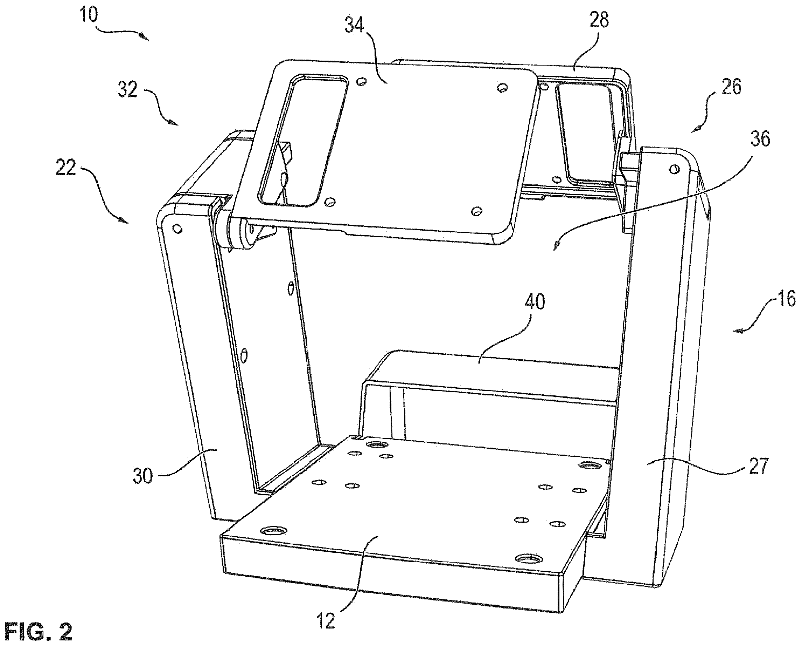

In den Figuren 1 und 2 ist jeweils eine schematische, perspektivische Darstellung eines Kassensystems 10 gemäß einer ersten Ausführungsform dargestellt, wobei in Figur 2 die Anzeigeeinheiten 18, 24 zur besseren Sichtbarkeit der anderen Bauteile nicht dargestellt sind.

Das Kassensystem 10 umfasst eine Trägereinheit 12, über die das Kassensystem 10 auf einer Standfläche aufgestellt und insbesondere auch auf dieser Standfläche befestigt werden kann. Zur Befestigung sind in der plattenförmig Trägereinheit 12 zumindest an der Unterseite Löcher vorgesehen, durch die Schrauben oder ähnliche Bauteile hindurch geführt werden können, so dass eine feste Befestigung an der Standfläche möglich ist. An der Oberseite der Trägereinheit 12 sind vorzugsweise ebenfalls Montageeinheiten vorgesehen, über die beispielsweise ein Bondrucker an der Trägereinheit 12 befestigt werden kann.

Ferner weist das Kassensystem 10 an einer ersten Seite 14 einen ersten Arm 16 auf, an dem die erste Anzeigeeinheit 18 befestigt ist. An einer der ersten Seite 14 entgegengesetzten zweiten Seite 20 ist ein zweiter Arm 22 vorgesehen, an dem die zweite Anzeigeeinheit 24 befestigt ist.

Bei den Anzeigeeinheiten 18, 24 handelt es sich insbesondere um Bildschirme, über die Informationen angezeigt werden. Insbesondere werden über einen der Bildschirme 18, 24 Informationen an einen Kunden und über den anderen an eine Bedienperson des Kassensystems 10, insbesondere einen Kassierer bzw. eine Kassiererin, angezeigt. Bei diesen Informationen kann es sich beispielsweise um die eingescannten Waren, deren Einzelpreise und/oder den jeweils aktuellen Gesamtpreis handeln.

Die Anzeigeeinheiten 18, 24 können insbesondere jeweils einen Touchscreen umfassen, so dass über ihn nicht nur Informationen angezeigt, sondern auch Informationen eingegeben werden können. Bei einer besonders bevorzugten Ausführungsform der Erfindung können die Anzeigeeinheiten 18, 24 auch nicht dauerhaft an den Armen 16, 22 befestigt sein, sondern an den Armen 16, 22 ist lediglich eine Befestigungseinheit vorgesehen, über die als Anzeigeeinheit jeweils ein Tablet befestigt werden kann.

Der erste Arm 16 weist einen ersten Abschnitt 27, ein Gelenk 26 sowie einen zweiten Abschnitt 28 auf, wobei das dem Gelenk 26 entgegengesetzte Ende des ersten Abschnitts 27 fest an der Trägereinheit 12 angeordnet ist und der zweite Abschnitt 28 über das Gelenk 26 gelenkig mit dem ersten Abschnitt 27 verbunden ist. Die Anzeigeeinheit 18 wiederum ist an dem zweiten Abschnitt 28 angeordnet.

Der zweite Arm 22 ist insbesondere baugleich mit dem ersten Arm 16 ausgebildet und weist entsprechend einen ersten Abschnitt 30, der fest mit der Trägereinheit 12 verbunden ist, ein Gelenk 32 und einen zweiten Abschnitt 34 auf, an dem wiederum die zweite Anzeigeeinheit 24 befestigt ist.

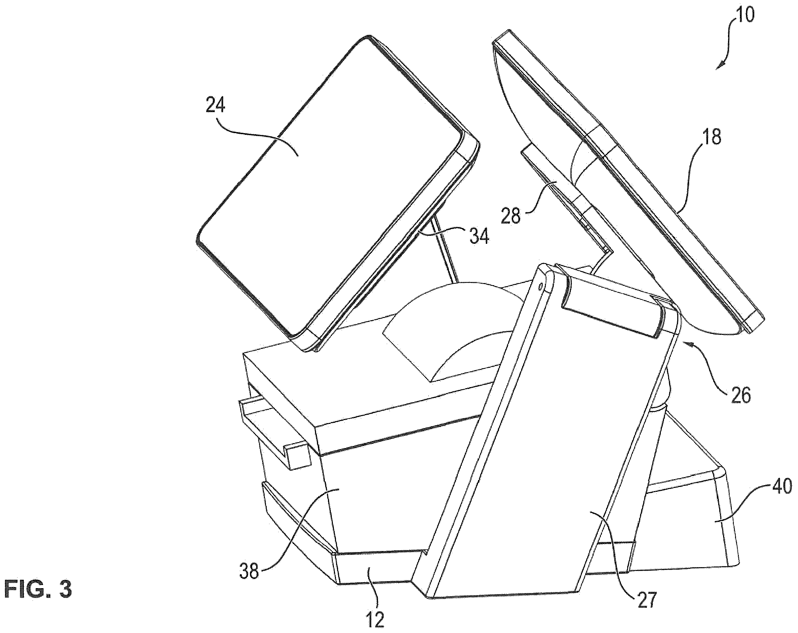

Durch die Trägereinheit 12, den ersten Abschnitt 27 des ersten Armes 16 sowie den ersten Abschnitt 30 des zweiten Armes 22 ist ein Aufnahmebereich 36 begrenzt, in dem, wie in Figur 3 gezeigt, ein Bondrucker 38 aufgenommen werden kann. Ferner ist an einem Ende der Trägereinheit 12 eine Abdeckung 40 vorgesehen, über die Schnittstellen des Bondruckers 38 und Verkabelungen abgedeckt werden können, so dass diese nicht sichtbar sind und außerdem geschützt sind.

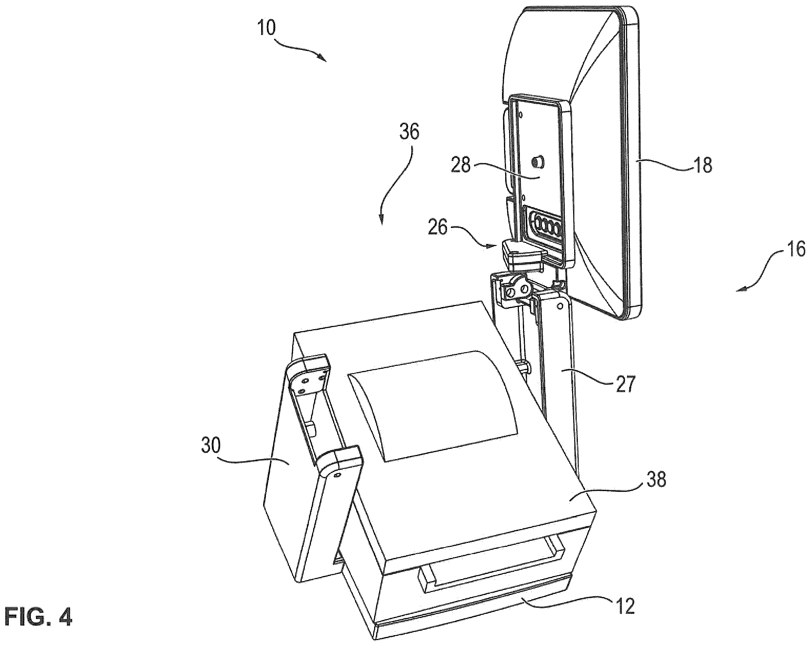

Mit Hilfe der Gelenke 26, 32 können die zweiten Abschnitte 28, 34 der Arme 16, 22 und entsprechend auch die an ihnen befestigten Anzeigeeinheiten 18, 24 zwischen einer in den Figuren 1 bis 3 gezeigten ersten Position und einer in Figur 4 gezeigten zweiten Position verschwenkt werden, wobei in Figur 4 zur besseren Sichtbarkeit des ersten Armes 16 das Gelenk 32, der zweite Abschnitt 34 des zweiten Armes 22 sowie die zweite Anzeigeeinheit 24 ausgeblendet sind. Bei der in den Figuren 1 bis 3 gezeigten ersten Position sind die zweiten Abschnitte 28, 34 und somit auch die Anzeigeeinheiten 14, 24 relativ zu den ersten Abschnitten 27, 30 abgewinkelt angeordnet, so dass die zweiten Abschnitte 28, 34 und die Anzeigeeinheiten 18, 24 oberhalb des Aufnahmebereiches 36 und somit oberhalb des Bondruckers 38 angeordnet sind. Diese erst Position ist diejenige Position, in der die Anzeigeeinheiten 18, 24 angeordnet sind, während das Kassensystem 10 planmäßig benutzt wird, also in der Position, in der sie zum Betrachten durch die Bedienperson bzw. den Kunden ausgerichtet sind.

Bei der in Figur 4 gezeigten zweiten Position dagegen sind die zweiten Abschnitte 28, 34 und die an ihnen befestigten Bildschirme 18, 24 derart relativ zur ersten Position nach oben geschwenkt, dass die zweiten Abschnitte 28, 34 und die Anzeigeeinheiten 18, 24 nicht mehr oberhalb des Aufnahmebereiches 36 und somit des Druckers 38 angeordnet sind, so dass der Drucker 38 oder andere im Aufnahmebereich 36 angeordnete Einheiten frei zugänglich sind. In dieser ersten Position sind der erste Abschnitt 27 und der zweite Abschnitt 28 bzw. der erste Abschnitt 30 und der zweite Abschnitt 34 jeweils insbesondere in einer Ebene angeordnet, so dass möglichst wenig Raum durch das Kassensystem 10 benötigt wird.

Durch diese Schwenkbarkeit der Anzeigeeinheiten 18, 24 wird erreicht, dass zum einen ein sehr kompaktes Kassensystem 10 gebildet ist und dennoch ein einfacher Zugriff auf die in dem Aufnahmebereich 36 angeordneten Einheiten für deren Wartung und/oder Austausch möglich ist.

Insbesondere wird nur eine sehr geringe Standfläche benötigt, nämlich eine Fläche, die gerade mal so groß ist wie die relativ klein ausgebildete Trägereinheit 12.

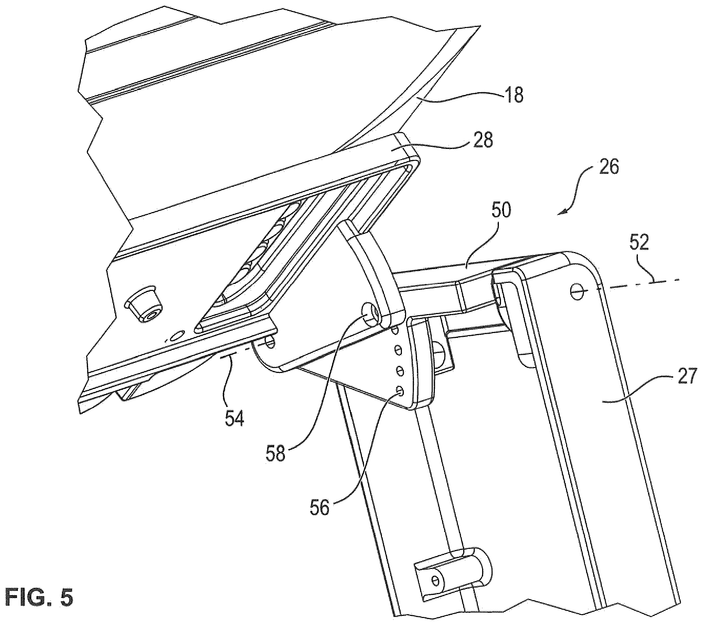

In Figur 5 ist eine vergrößerte Darstellung eines Ausschnitts des Kassensystems 10 gezeigt, wobei der Blick auf das Gelenk 26 des ersten Arms 16 gerichtet ist, um seinen Aufbau und seine Funktionsweise näher zu beschreiben. Das zweite Gelenk 32 ist analog aufgebaut, so dass die folgende Beschreibung für dieses Gelenk analog gilt.

Das Gelenk 26 umfasst eine Zwischeneinheit 50, die um eine Drehachse 52 drehbar an dem ersten Abschnitt 27 gelagert ist. Durch Schwenken der Zwischeneinheit 50 um diese Drehachse 52 kann der zweite Abschnitt 28 und somit die Anzeigeeinheit 18 von der ersten in die zweite Position verschwenkt werden.

Bei dem in Figur 5 gezeigten Ausführungsbeispiel ist der zweite Abschnitt 28 aber nicht fest an der Zwischeneinheit 50 angeordnet, sondern ist um eine weitere Achse 54 drehbar an der Zwischeneinheit 50 angeordnet, wobei durch das Drehen um die Achse 54 ein Verkippen des zweiten Abschnitts 28 und somit der Anzeigeeinheit 18 erfolgt, durch das der Betrachtungswinkel eingestellt werden kann. Insbesondere sind in der Zwischeneinheit 50 mehrere Löcher vorgesehen, von denen eines beispielhaft mit dem Bezugszeichen 56 bezeichnet ist. In dem zweiten Abschnitt 28 ist ebenfalls ein Loch 58 vorgesehen, welches wahlweise mit einem der Löcher 56 fluchtend angeordnet werden kann, so dass durch die fluchtend angeordneten Löcher ein Befestigungselement zum Halten des zweiten Abschnitts 28 und somit der Anzeigeeinheit 18 in der gewünschten Kippposition geführt werden kann.

Alternativ kann die Verkippbarkeit der Anzeigeeinheit 18 auch durch eine Kulisse, ein Langloch mit Klemmungen und/oder eine Verzahnung mit Klemmungen realisiert werden.

Die beiden Achsen 52 und 54 sind insbesondere orthogonal zueinander angeordnet.

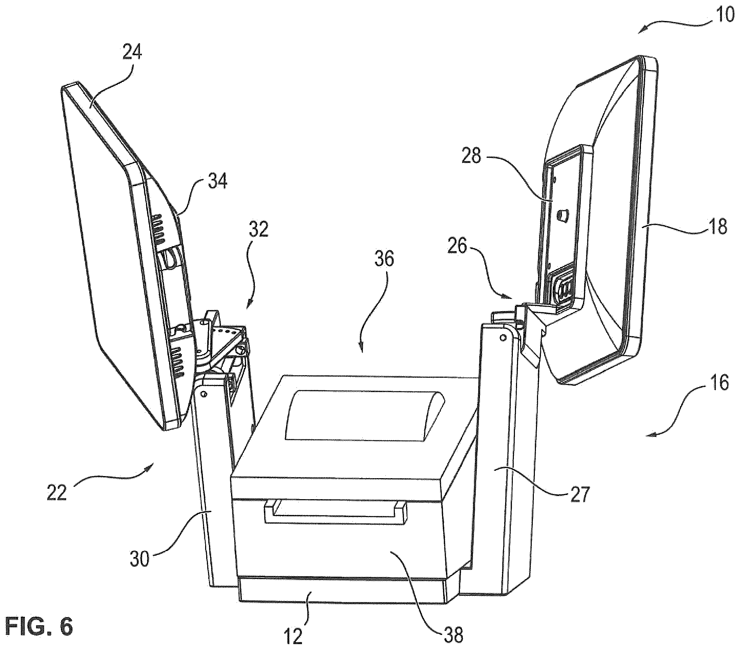

Das Verkippen der Anzeigeeinheit 18 um die Achse 54 kann aber nicht nur dann genutzt werden, wenn der zweite Abschnitt 28 in eine erste Position angeordnet ist, also der Bildschirm 18 oberhalb des Druckers 38 angeordnet ist und somit der Betrachtungswinkel eingestellt werden soll, sondern auch dann, wenn der zweite Abschnitt 28 und somit die Anzeigeeinheit 18 zur Wartung nach oben in die zweite Position verschwenkt sind, so dass durch entsprechendes Verkippen um die Achse 54 die Anzeigeeinheit 18 in der in Figur 6 gezeigten dritten Position angeordnet ist. Hierdurch kann ein noch größerer Zugriffsbereich auf den Aufnahmebereich 36 erzielt werden.

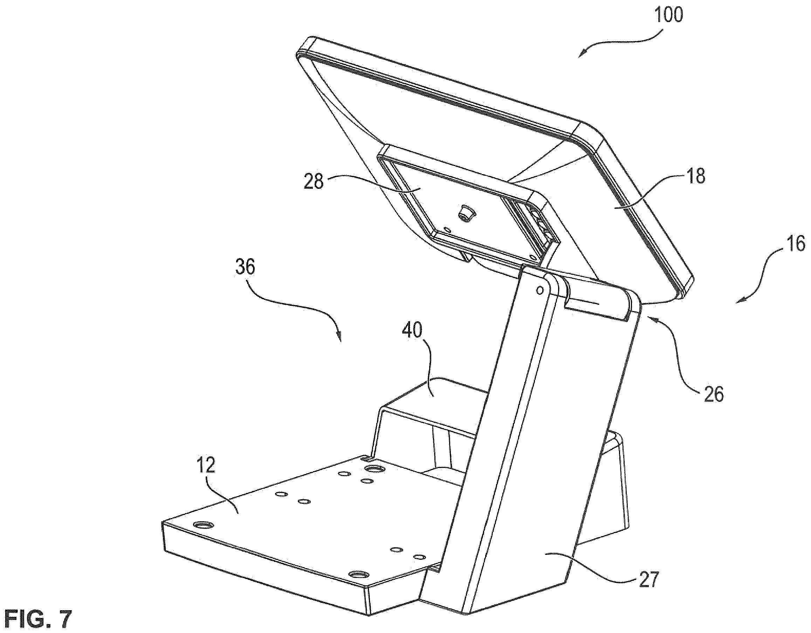

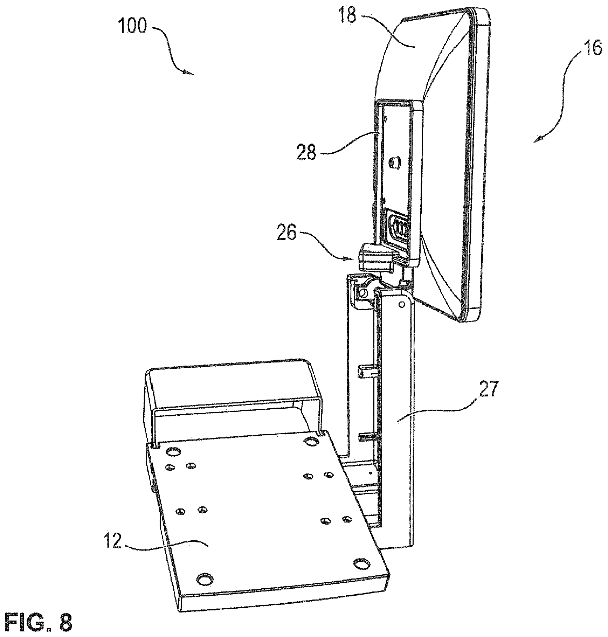

In den Figuren 7 und 8 ist jeweils eine schematische perspektivische Darstellung eines Kassensystems 100 gemäß einer zweiten Ausführungsform gezeigt. Elemente mit gleichem Aufbau oder gleicher Funktion sind mit den gleichen Bezugszeichen bezeichnet.

Bei diesem zweiten Ausführungsbeispiel weist das Kassensystem 100 nur einen Arm 16 auf. Auch hierbei kann wieder ein Verschwenken des zweiten Abschnitts 28 und der an ihm angeordneten Anzeigeeinheit 18 von der in Figur 7 gezeigten ersten in die in Figur 8 gezeigte zweite Position erfolgen, damit ein besserer Zugriff auf die in dem Aufnahmebereich 36 aufnehmbaren Einheiten möglich ist.

### Bezugszeichenliste

- 10, 100: Kassensystem
- 12: Trägereinheit
- 14, 20: Seite
- 16, 22: Arm
- 18, 24: Anzeigeeinheit
- 27, 30: erster Abschnitt
- 26, 32: Gelenk
- 28, 34: zweiter Abschnitt
- 36: Aufnahmebereich
- 38: Bondrucker
- 40: Abdeckung
- 50: Zwischeneinheit
- 52, 54: Achse
- 56, 58: Loch

## Patentansprüche

1. Kassensystem,
mit einer Trägereinheit (12) zum Befestigen des Kassensystems (10, 100) auf einer Standfläche,
einer ersten Anzeigeeinheit (18) zur Anzeige von Informationen an eine Bedienperson und/oder einen Kunden, und
mit einem ersten Arm (16) zum Halten der Anzeigeeinheit (18),
wobei der erste Arm (16) einen ersten Abschnitt (27) und einen relativ zu diesem schwenkbaren zweiten Abschnitt (28) umfasst,
wobei das dem zweiten Abschnitt (28) entgegensetzte Ende des ersten Abschnitts (27) an der Trägereinheit (12) befestigt ist,
wobei an dem zweiten Abschnitt (28) die erste Anzeigeeinheit (18) angeordnet ist,
wobei durch die Trägereinheit (12) und den ersten Abschnitt (27) des ersten Arms (16) ein Aufnahmebereich (36) zur Aufnahme eines Bondruckers (38) begrenzt ist, und
wobei der zweite Abschnitt (28) derart gelenkig an dem ersten Abschnitt (27) befestigt ist, dass er in einer ersten Position oberhalb des Aufnahmebereiches (36) angeordnet ist und in einer zweiten Position derart angeordnet ist, dass der Bereich oberhalb des Aufnahmebereiches (36) frei ist, **dadurch gekennzeichnet,**
**dass** das Kassensystem (10, 100) eine zweite Anzeigeeinheit (24) zur Anzeige von Informationen an eine Bedienperson und/oder einen Kunden und einen zweiten Arm (22) zum Halten der zweiten Anzeigeeinheit (24) umfasst,
**dass** der zweite Arm (22) einen ersten Abschnitt (30) und einen relativ zu diesem schwenkbaren zweiten Abschnitt (34) umfasst,
**dass** das dem zweiten Abschnitt (34) des zweiten Arms (22) entgegensetzte Ende des ersten Abschnitts (30) des zweiten Arms (22) an der Trägereinheit (12) befestigt ist,
**dass** an dem zweiten Abschnitt (34) des zweiten Arms (22) die zweite Anzeigeeinheit (24) angeordnet ist,
**dass** der Aufnahmebereich (36) durch den ersten Abschnitt (30) des zweiten Arms (22) begrenzt ist,
**dass** die beiden Arme (16, 22) an gegenüberliegenden Seiten (14, 20) der Trägereinheit (12) angeordnet sind,
**dass** der zweite Abschnitt (34) des zweiten Arms (22) derart gelenkig an dem ersten Abschnitt (30) des zweiten Arms (22) befestigt ist, dass er in einer ersten Position oberhalb des Aufnahmebereichs (36) angeordnet ist und in einer zweiten Position derart angeordnet ist, dass der Bereich oberhalb des Aufnahmebereiches (36) frei ist,
**dass** der erste Abschnitt (27) und der zweite Abschnitt (28) des ersten Arms (16) und der erste Abschnitt (30) und der zweite Abschnitt (34) des zweiten Arms (22) jeweils über ein Gelenk (26, 32) miteinander verbunden sind,
**dass** das Gelenk (26, 32) jeweils derart ausgebildet ist, dass der jeweilige zweite Abschnitt (28, 34) relativ zum jeweiligen ersten Abschnitt (27, 30) um eine vorbestimmte Drehachse (52) verschwenkbar ist,
**dass** das Gelenk (26, 32) jeweils derart ausgebildet ist, dass die jeweilige Anzeigeeinheit (18, 27) zum Einstellen des Betrachtungswinkels um jeweils eine Kippachse (54) verkippbar ist,
**dass** die Drehachse (52) und die Kippachse (54) der Gelenke (26, 32) jeweils orthogonal zueinander verlaufen, und
**dass** in der zweiten Position der erste Abschnitt (27) und der zweite Abschnitt (28) des ersten Arms (16) und der erste Abschnitt (30) und der zweite Abschnitt (34) des zweiten Arms (22) jeweils in einer Ebene angeordnet sind.

2. Kassensystem (10, 100) nach Anspruch 1, **dadurch gekennzeichnet, dass** der erste Arm (16) und der zweite Arm (22) identisch aufgebaut sind.

3. Kassensystem (10, 100) nach einem der vorhergehenden Ansprüche, **dadurch gekennzeichnet, dass** der zweite Abschnitt (28) des ersten Arms (16) in der zweiten Position relativ zur ersten Position und/oder der zweite Abschnitt (34) des zweiten Arms (22) in der zweiten Position relativ zur ersten Position jeweils um einen Winkel von 90° verschwenkt sind.

4. Kassensystem (10, 100) nach einem der vorhergehenden Ansprüche, **dadurch gekennzeichnet, dass** in der ersten Position der erste Abschnitt (27) und der zweite Abschnitt (28) des ersten Arms (16) und/oder der erste Abschnitt (30) und der zweite Abschnitt (34) des zweiten Arms (22) jeweils orthogonal zueinander angeordnet sind.

5. Kassensystem (10, 100) nach einem der vorhergehenden Ansprüche, **dadurch gekennzeichnet, dass** die erste Anzeigeeinheit (18) und/oder die zweite Anzeigeeinheit (24) jeweils einen Bildschirm, insbesondere einen Touchscreen, und/oder ein Tablet und eine Befestigungseinheit zur Aufnahme des Tablets umfassen.

6. Kassensystem (10, 100) nach einem der vorhergehenden Ansprüche, **dadurch gekennzeichnet, dass** die beiden Arme (16, 22) zu entgegengesetzten Seiten geneigt sind.

7. Kassensystem (10, 100) nach einem der vorhergehenden Ansprüche, **dadurch gekennzeichnet, dass** die Trägereinheit (12) plattenförmig ist.

8. Kassensystem (10, 100) nach einem der vorhergehenden Ansprüche, **dadurch gekennzeichnet, dass** die Trägereinheit (12) derart ausgebildet ist, dass in der Trägereinheit (12) ein Computer aufnehmbar ist.

9. Kassensystem (10, 100) nach einem der vorhergehenden Ansprüche, **dadurch gekennzeichnet, dass** die Trägereinheit (12) und/oder der Aufnahmebereich (36) derart ausgebildet sind, dass der Bondrucker (38) in mindestens zwei verschiedenen Ausrichtungen aufnehm- und befestigbar ist, in denen er relativ zueinander um 180° gedreht angeordnet ist.

## Claims

1. Point-of-sale system
having a carrier unit (12) for fixing the point-of-sale system (10, 100) to a base surface,
a first display unit (18) for displaying information to an operator and/or a customer, and
having a first arm (16) for holding the display unit (18),
wherein the first arm (16) comprises a first section (27) and a second section (28) pivotable relative to this, wherein the end of the first section (27) that is opposite to the second section (28) is fixed to the carrier unit (12),
wherein the first display unit (18) is arranged on the second section (28),
wherein a receiving area (36) for receiving a receipt printer (38) is delimited by the carrier unit (12) and the first section (27) of the first arm (16), and wherein the second section (28) is fixed to the first section (27) in an articulated manner in such a way that, in a first position, it is arranged above the receiving area (36) and, in a second position, it is arranged in such a way that the area above the receiving area (36) is free,
**characterized**
**in that** the point-of-sale system (10, 100) comprises a second display unit (24) for displaying information to an operator and/or a customer and a second arm (22) for holding the second display unit (24),
**in that** the second arm (22) comprises a first section (30) and a second section (34) pivotable relative to this,
**in that** the end of the first section (30) of the second arm (22) that is opposite to the second section (34) of the second arm (22) is fixed to the carrier unit (12), in that the second display unit (24) is arranged on the second section (34) of the second arm (22),
**in that** the receiving area (36) is delimited by the first section (30) of the second arm (22),
**in that** the two arms (16, 22) are arranged on opposite sides (14, 20) of the carrier unit (12),
**in that** the second section (34) of the second arm (22) is fixed to the first section (30) of the second arm (22) in an articulated manner in such a way that, in a first position, it is arranged above the receiving area (36) and, in a second position, it is arranged in such a way that the area above the receiving area (36) is free,
**in that** the first section (27) and the second section (28) of the first arm (16), and the first section (30) and the second section (34) of the second arm (22), are each connected to each other via a joint (26, 32),
**in that** the joint (26, 32) is in each case formed in such a way that the respective second section (28, 34) is pivotable relative to the respective first section (27, 30) about a predetermined axis of rotation (52),
**in that** the joint (26, 32) is in each case formed in such a way that the respective display unit (18, 27) can be tilted about a respective tilt axis (54) to set the viewing angle,
**in that** the axis of rotation (52) and the tilt axis (54) of the joints (26, 32) each extend orthogonally to each other, and
**in that**, in the second position, the first section (27) and the second section (28) of the first arm (16), and the first section (30) and the second section (34) of the second arm (22), are each arranged in a plane.

2. Point-of-sale system (10, 100) according to Claim 1, **characterized in that** the first arm (16) and the second arm (22) are constructed identically.

3. Point-of-sale system (10, 100) according to either of the preceding claims, **characterized in that** the second section (28) of the first arm (16) in the second position relative to the first position and/or the second section (34) of the second arm (22) in the second position relative to the first position are each pivoted by an angle of 90°.

4. Point-of-sale system (10, 100) according to one of the preceding claims, **characterized in that** in the first position, the first section (27) and the second section (28) of the first arm (16) and/or the first section (30) and the second section (34) of the second arm (22) are each arranged orthogonally to each other.

5. Point-of-sale system (10, 100) according to one of the preceding claims, **characterized in that** the first display unit (18) and/or the second display unit (24) each comprise a screen, in particular a touch screen, and/or a tablet and a fixing unit for receiving the tablet.

6. Point-of-sale system (10, 100) according to one of the preceding claims, **characterized in that** the two arms (16, 22) are inclined to opposite sides.

7. Point-of-sale system (10, 100) according to one of the preceding claims, **characterized in that** the carrier unit (12) is plate-shaped.

8. Point-of-sale system (10, 100) according to one of the preceding claims, **characterized in that** the carrier unit (12) is designed in such a way that a computer can be accommodated in the carrier unit (12).

9. Point-of-sale system (10, 100) according to one of the preceding claims, **characterized in that** the carrier unit (12) and/or the receiving area (36) are designed in such a way that the receipt printer (38) can be accommodated and fixed in at least two different orientations, in which it is arranged to be rotated by 180° relative to each other.

## Revendications

1. Système de caisse,
comportant une unité de support (12) servant à la fixation du système de caisse (10, 100) sur une surface d'appui,
une première unité d'affichage (18) servant à l'affichage d'informations destinées à un opérateur et/ou un client, et
comportant un premier bras (16) servant à retenir l'unité d'affichage (18),
le premier bras (16) présentant une première partie (27) et une deuxième partie (28) pouvant pivoter par rapport à celle-ci,
l'extrémité de la première partie (27) opposée à la deuxième partie (28) étant fixée à l'unité de support (12),
la première unité d'affichage (18) étant disposée sur la deuxième partie (28),
une région de réception (36) servant à la réception d'une imprimante de tickets (38) étant délimitée par l'unité de support (12) et la première partie (27) du premier bras (16), et
la deuxième partie (28) étant fixée de manière articulée à la première partie (27) de telle sorte que, dans une première position, elle est disposée au-dessus de la région de réception (36) et, dans une deuxième position, elle est disposée de telle sorte que la région au-dessus de la région de réception (36) est libre, **caractérisé en ce que** le système de caisse (10, 100) présente une deuxième unité d'affichage (24) servant à l'affichage d'informations destinées à un opérateur et/ou un client et un deuxième bras (22) servant à retenir la deuxième unité d'affichage (24),
**en ce que** le deuxième bras (22) présente une première partie (30) et une deuxième partie (34) pouvant pivoter par rapport à celle-ci,
**en ce que** l'extrémité, opposée à la deuxième partie (34) du deuxième bras (22), de la première partie (30) du deuxième bras (22) est fixée à l'unité de support (12), **en ce que** la deuxième unité d'affichage (24) est disposée sur la deuxième partie (34) du deuxième bras (22),
**en ce que** la région de réception (36) est délimitée par la première partie (30) du deuxième bras (22),
**en ce que** les deux bras (16, 22) sont disposés sur des côtés opposés (14, 20) de l'unité de support (12),
**en ce que** la deuxième partie (34) du deuxième bras (22) est fixée de manière articulée à la première partie (30) du deuxième bras (22) de telle sorte que, dans une première position, elle est disposée au-dessus de la région de réception (36) et, dans une deuxième position, elle est disposée de telle sorte que la région au-dessus de la région de réception (36) est libre,
**en ce que** la première partie (27) et la deuxième partie (28) du premier bras (16) et la première partie (30) et la deuxième partie (34) du deuxième bras (22) sont respectivement reliées les unes aux autres par le biais d'une articulation (26, 32),
**en ce que** l'articulation (26, 32) est réalisée respectivement de telle sorte que la deuxième partie (28, 34) respective peut pivoter par rapport à la première partie (27, 30) respective autour d'un axe de rotation (52) prédéfini,
**en ce que** l'articulation (26, 32) est réalisée respectivement de telle sorte que l'unité d'affichage (18, 27) respective peut être basculée autour d'un axe de basculement (54) respectivement pour le réglage de l'angle de vue,
**en ce que** l'axe de rotation (52) et l'axe de basculement (54) des articulations (26, 32) s'étendent respectivement orthogonalement l'un par rapport à l'autre, et
**en ce que**, dans la deuxième position, la première partie (27) et la deuxième partie (28) du premier bras (16) et la première partie (30) et la deuxième partie (34) du deuxième bras (22) sont disposées respectivement dans un plan.

2. Système de caisse (10, 100) selon la revendication 1, **caractérisé en ce que** le premier bras (16) et le deuxième bras (22) sont construits de manière identique.

3. Système de caisse (10, 100) selon l'une des revendications précédentes, **caractérisé en ce que**, dans la deuxième position, la deuxième partie (28) du premier bras (16) peut être pivotée par rapport à la première position et/ou, dans la deuxième position, la deuxième partie (34) du deuxième bras (22) peut être pivotée par rapport à la première position, respectivement d'un angle de 90°.

4. Système de caisse (10, 100) selon l'une des revendications précédentes, **caractérisé en ce que**, dans la première position, la première partie (27) et la deuxième partie (28) du premier bras (16) et/ou la première partie (30) et la deuxième partie (34) du deuxième bras (22) sont disposées respectivement orthogonalement les unes par rapport aux autres.

5. Système de caisse (10, 100) selon l'une des revendications précédentes, **caractérisé en ce que** la première unité d'affichage (18) et/ou la deuxième unité d'affichage (24) présentent respectivement un écran, en particulier un écran tactile, et/ou une tablette et une unité de fixation servant à la réception de la tablette.

6. Système de caisse (10, 100) selon l'une des revendications précédentes, **caractérisé en ce que** les deux bras (16, 22) sont inclinés vers des côtés opposés.

7. Système de caisse (10, 100) selon l'une des revendications précédentes, **caractérisé en ce que** l'unité de support (12) est en forme de plaque.

8. Système de caisse (10, 100) selon l'une des revendications précédentes, **caractérisé en ce que** l'unité de support (12) est réalisée de telle sorte qu'un ordinateur peut être reçu dans l'unité de support (12).

9. Système de caisse (10, 100) selon l'une des revendications précédentes, **caractérisé en ce que** l'unité de support (12) et/ou la région de réception (36) sont réalisées de telle sorte que l'imprimante de tickets (38) peut être reçue et fixée dans au moins deux orientations différentes, dans lesquelles elle est disposée de manière tournée de 180° dans une orientation par rapport à l'autre.
